# FASCICULE DE BREVET EUROPEEN

(11) **EP 0 564 555 B1**
(45) Date de publication et mention de la délivrance du brevet: **27.07.1994**
(21) Numéro de dépôt: 92903066.6
(22) Date de dépôt: 18.12.1991
(51) Int. Cl.: B60P 1/64, B65G 63/02

(54) **APPAREIL PERMETTANT D'ASSURER LE TRANSBORDEMENT LATERAL DES CONTENEURS**
VORRICHTUNG UM SEITLICHES UMLADEN VON CONTAINERN ZU GEWÄHRLEISTEN
APPARATUS FOR THE LATERAL TRANSFERRING OF CONTAINERS

(30) Priorité: 20.12.1990 FR 9016558
(43) Date de publication de la demande: 13.10.1993
(73) Titulaire: BOTELLA, Jean-Marc, F-31470 S.-Lys (FR)
(72) Inventeur: BOTELLA, Jean-Marc, F-31470 S.-Lys (FR)
(74) Mandataire: Schlawick, Yvan
(86) Numéro de dépôt international: FR9101030
(87) Numéro de publication internationale: WO9211146

(56) Documents cités:
- DE-A- 3 239 622
- DE-A- 3 609 738
- DE-B- 1 294 878
- FR-A- 2 427 978
- FR-A- 2 644 118
- US-A- 3 332 661

## Description

La présente invention a trait au domaine du transport combiné rail-route et concerne plus particulièrement un appareil du type de celui qui assure le transbordement latéral des conteneurs de la plate-forme d'un véhicule à la plate-forme d'un autre véhicule.

Un tel appareil, appelé plus précisément transbordeur, a pour objet le transfert de conteneurs (généralement remplis de produits en vrac) de la plate-forme d'un véhicule telle que la remorque d'un camion à la plate-forme d'un autre véhicule telle que la voiture de chemin de fer, et vice-versa.

Dans le contexte de la présente invention, il faut entendre conventionnellement par "routier" tous les éléments qui font partie de la remorque du camion et par "ferroviaire" tous les éléments qui font partie de la voiture de chemin de fer.

Un transbordeur de ce genre a déjà été proposé dans la demande de brevet français FR-A-2.644.118. Un tel appareil comprend notamment :
- un chemin de roulement latéral se composant de deux glissières mâles télescopiques parallèles destinées à coopérer avec deux glissières femelles correspondantes préformées à cet effet dans le plateau-support des conteneurs et adoptant le profil d'un U renversé,
- et un train de roulement automoteur constitué de deux chariots montés mobiles le long desdites glissières mâles déployées pour venir trouver place à l'intérieur des glissières femelles.

Chacune des glissières mâles télescopiques est à cet effet constituée d'au moins deux rails juxtaposés dont l'un, dit rail support, est fixé à la plate-forme du véhicule routier transversalement aux longerons de ce dernier, et dont l'autre, dit rail porteur, est le rail qui peut être déployé latéralement de la plate-forme du véhicule routier pour venir se positionner au-dessus de la plate-forme du véhicule ferroviaire, sur laquelle il prend appui. La présence des deux glissières femelles préformées en U renversé dans le plateau-support du conteneur permet à celui-ci de recevoir les deux glissières mâles avec son train de roulement automoteur, et ce sans l'intervention préalable d'une opération de levage dudit conteneur. La fonction télescopique des deux glissières mâles permet à celles-ci, en position rétractée d'une part, de s'escamoter sous le conteneur lorsque le véhicule routier roule normalement, et en position déployée d'autre part, de leur assurer un déport latéral par rapport au plan médian vertical de la plate-forme du véhicule routier. Le chemin de roulement latéral ainsi formé par ces deux glissières mâles en extension, permet de positionner les susdites glissières télescopiques, et plus particulièrement l'extrémité de ces dernières, sur la plate-forme du véhicule ferroviaire pour que le susdit train de roulement automoteur puissse évoluer de la plate-forme routière à la plate-forme ferroviaire, et vice-versa.

Les rails support des susdites glissières télescopiques mâles sont également réglables en hauteur pour pouvoir ajuster l'assiette du plan desdites glissières avec celui de la plate-forme ferroviaire sur lequel elles reposeront pour prendre appui. Ainsi, l'extrémité libre desdites glissières mâles télescopiques prendra appui directement sur la plate-forme ferroviaire quelle que soit la hauteur de cette dernière par rapport à la route.

Le train de roulement automoteur est, quant à lui, constitué de deux chariots montés mobiles le long des glissières télescopiques mâles déployées pour trouver place à l'intérieur des glissières femelles qui s'étendent sur toute la largeur du plateau-support des conteneurs selon le profil d'un U renversé. Dès lors, les deux chariots, montés mobiles le long des glissières télescopiques mâles, assurent, en s'insérant dans le U renversé des glissières femelles, le levage et le transport du conteneur entre la plate-forme routière et la plate-forme ferroviaire, et vice-versa.

Le principal objectif de la présente invention concerne notamment une amélioration de ce type de transbordeur latéral, axée plus particulièrement sur les moyens de levage du conteneur pour permettre à celui-ci de se dissocier de son assise formée par le plan de la plate-forme ferroviaire, afin d'assurer la dépose et/ou la pose du conteneur sur les chariots du train de roulement automoteur.

A cet effet, selon l'invention, les susdits rails porteurs des glissières mâles télescopiques du transbordeur sont équipés, uniformément répartis sur leur longueur, de vérins extensibles et rétractables verticalement de manière à ce que, lorsque lesdits rails sont logés à l'intérieur des glissières femelles en U dudit conteneur, lesdits vérins se calent entre la plate-forme ferroviaire et la face interne de la branche horizontale du U renversé des glissières femelles, pour élever (en position déployée) ou pour abaisser (en position rétractée) ledit conteneur par rapport au plan de la plate-forme porteuse. Ainsi, la commande du mouvement d'extension ou de rétraction de la tige de ces vérins de levage, ainsi appelés conventionnellement, assure alors respectivement l'élévation ou l'abaissement du conteneur par rapport à la plate-forme porteuse.

En position haute, lorsque les vérins de levage sont en extension, le conteneur est surélevé par rapport à la plate-forme ferroviaire et les chariots du train de roulement automoteur peuvent venir trouver place à l'intérieur des glissières femelles. La présence de ces vérins de levage permet notamment d'augmenter virtuellement la hauteur des jambages du U renversé des glissières femelles préformées dans le plateau-support du conteneur, pour autoriser à l'intérieur de celles-ci la pénétration et/ou le retrait des chariots du train de roulement automoteur.

Ces vérins de levage peuvent assurer, lorsque leurs tiges sont rétractées, la pose dudit conteneur sur les chariots du train de roulement automoteur.

Cependant, selon une forme de réalisation préférée de l'invention, des vérins élévateurs sont installés sur les chariots du train automoteur, de telle sorte que, lorsque ces derniers ont pris place à l'intérieur des glissières femelles en U du conteneur soutenu par les vérins de levage des glissières mâles, ils puissent engendrer une surélévation du conteneur le dégageant de sa portance sur lesdits vérins de levage pour autoriser son transport par les chariots, le soutenant par les vérins élévateurs, pendant la phase proprement dite de transbordement. La surélévation du conteneur a pour objet également de permettre au conteneur de franchir aisément les obstacles d'infrastructure de la plate-forme routière pendant le transbordement. En outre, une fois que le conteneur est positionné au-dessus de la plate-forme routière, le conteneur peut être abaissé vers une position basse, pour ne le faire reposer que sur le châssis de la plate-forme routière, éventuellement préformée pour le recevoir.

Un autre objectif du transbordeur de la présente invention, est d'assurer le déchargement et/ou le chargement longitudinal dudit conteneur de la plate-forme du véhicule routier. Pour ce faire, les rails supports desdites glissières mâles télescopiques sont solidaires d'un châssis intermédiaire fixé, de manière amovible, sur la plate-forme du véhicule routier. Ce châssis comprend notamment deux longerons qui, portant transversalement les deux rails supports des glissières mâles télescopiques, sont équipés chacun d'au moins deux vérins faisant office de béquilles. Avantageusement, ces vérins sont montés escamotables entre une position horizontale inactive parallèle au plan du châssis lorsque le véhicule routier roule, et une position active verticale pour assurer des mouvements d'élévation ou d'abaissement du châssis par rapport au plan de la plate-forme du véhicule routier. Ainsi, lorsque le conteneur repose sur la plate-forme routière, il suffit de faire basculer les béquilles en position verticale de manière à ce que les tiges des vérins puissent prendre appui sur le sol. Le déploiement des tiges s'opère avec un double effet : dans un premier temps, il permet aux extrémités de celles-ci de pendre appui sur le sol et dans un deuxième temps, il permet de provoquer l'élévation du châssis intermédiaire désolidarisé de la plate-forme du véhicule routier. Ainsi, l'appareil de transbordement portant le conteneur repose sur le sol de manière surélevée par rapport à la plate-forme routière de telle sorte que cette dernière puisse être dégagée de dessous de l'appareil et du conteneur y associé, par une simple marche avant du véhicule routier.

La commande de rétraction des tiges des vérins et celle d'escamotage de ces béquilles permettent alors d'assurer un transbordement latéral du conteneur vers un plan de réception situé à un niveau beaucoup plus bas que celui de la plate-forme routière. Ce plan de réception peut être en l'occurrence l'aire de stockage dudit conteneur. La possibilité d'assumer un déchargement et/ou un chargement longitudinal des conteneurs offre un grand avantage en autorisant notamment les transbordement latéraux quelle que soit la hauteur de la plate-forme réceptionniste.

Les deux concepts fondamentaux de l'invention venant d'être évoqués ci-dessus dans leur forme la plus élémentaire, d'autres caractéristiques et d'autres avantages ressortiront plus clairement à la lecture de la description qui suit, donnant à titre d'exemple non limitatif et en regard des dessins annexés, un mode de réalisation d'un appareil de transbordement respectant ces deux concepts.

Sur ces dessins :

Les figures 1, 2, 3, 4, 5 et 6 sont des vues en perspective schématique du transbordeur de l'invention, illustrant les phases de transbordement latéral d'un conteneur, de la plate-forme d'un véhicule ferroviaire vers la plate-forme d'un véhicule routier.

Les figures 7 et 8 sont des vues en perspective schématique de l'appareil de tranbordement de l'invention, illustrant notamment les phases de déchargement longitudinal d'un conteneur à partir de la plate-forme d'un véhicule routier.

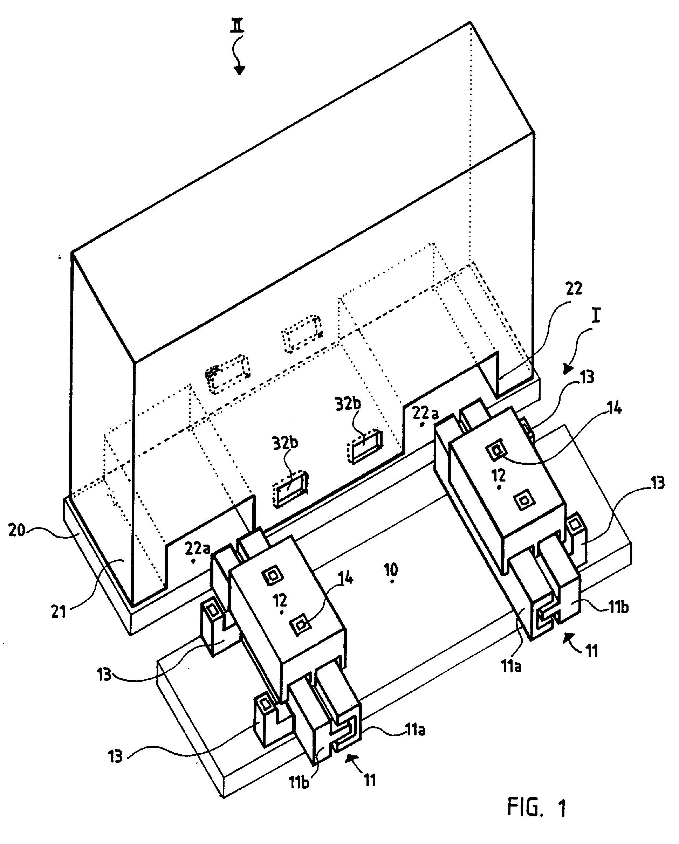

Les plateaux 10 et 20, illustrés sur les dessins des figures 1 à 6, symbolisent respectivement la plate-forme d'un véhicule routier pour le premier et la plate-forme d'une voiture de chemin de fer pour le deuxième. Sur la plate-forme 10 du véhicule routier est installé l'appareil de transbordement de l'invention référencé I dans son ensemble alors que sur la plate-forme 20 de la voiture de chemin de fer, repose le conteneur référencé II dans son ensemble.

Conformément à l'invention, le plateau-support inférieur 21 du conteneur II est ménagé de deux glissières femelles 22 en forme de U renversé, de manière à présenter deux galeries latérales 22a, une fois le conteneur II posé sur le plateau de la plate-forme 20.

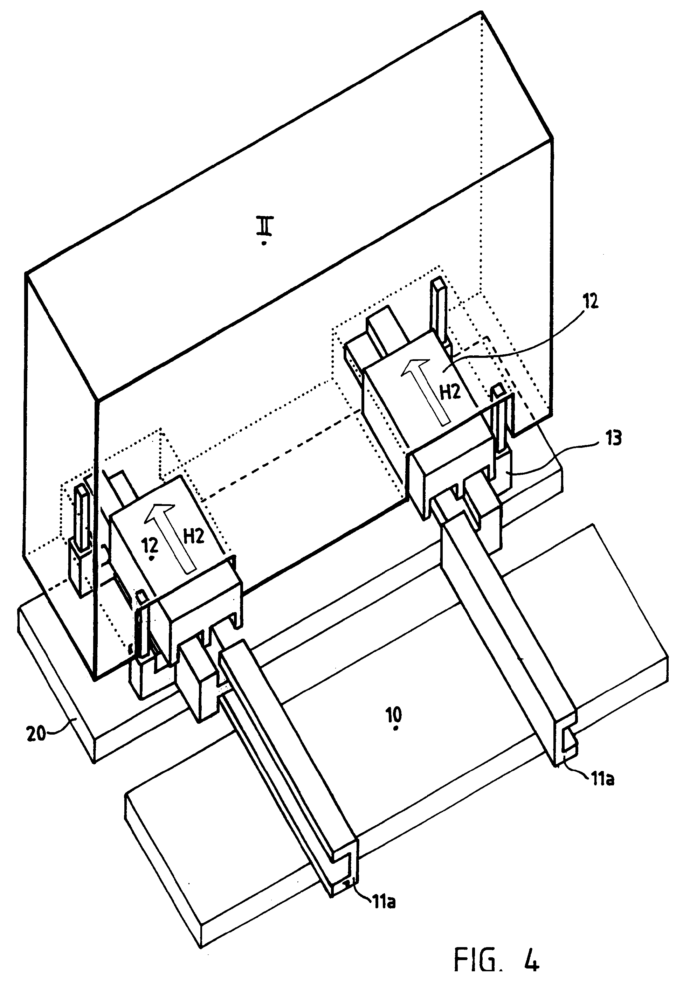

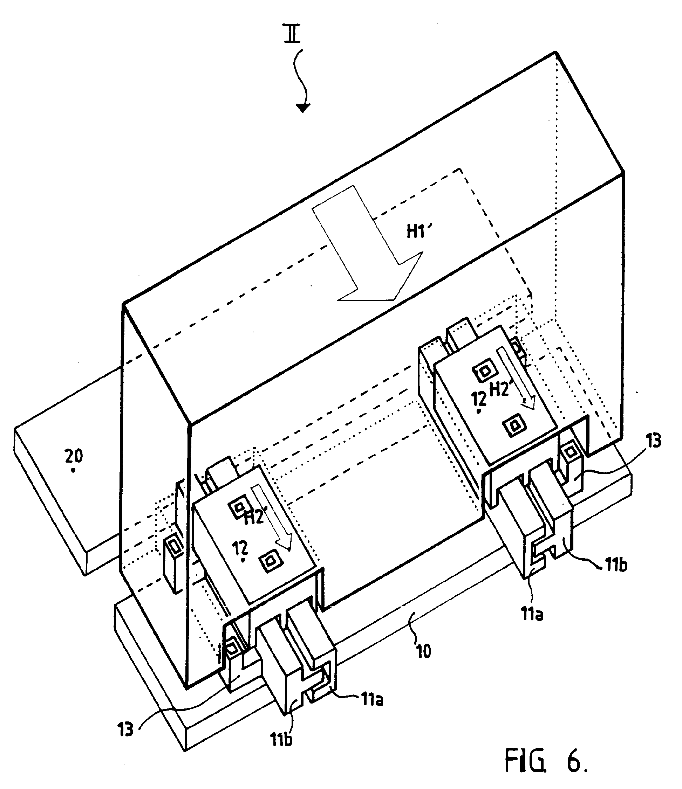

L'appareil de transbordement I de l'invention est constitué notamment de deux glissières mâles télescopiques parallèles 11 se composant chacune de deux rails juxtaposés 11a et 11b dont le premier, appelé rail support dans le contexte de la présente invention, est fixé sur la plate-forme 10 du véhicule routier, transversalement aux longerons de ce dernier, et dont le deuxième, appelé rail porteur, est le rail qui peut être déployé latéralement, en déport de la plate-forme 10, pour venir pénétrer à l'intérieur des galeries 22a délimitées par les glissières femelles 22. Ces glissières télescopiques mâles 11 ainsi déployées définissent alors un chemin de roulement latéral à un train de roulement automoteur constitué de deux chariots 12 montés mobiles le long des glissières mâles (cf. figures 4 et 6). Comme on le verra un peu plus loin dans la description, ces deux glissières mâles peuvent reposer sur la plate-forme routière, au moyen d'un châssis intermédiaire indépendant.

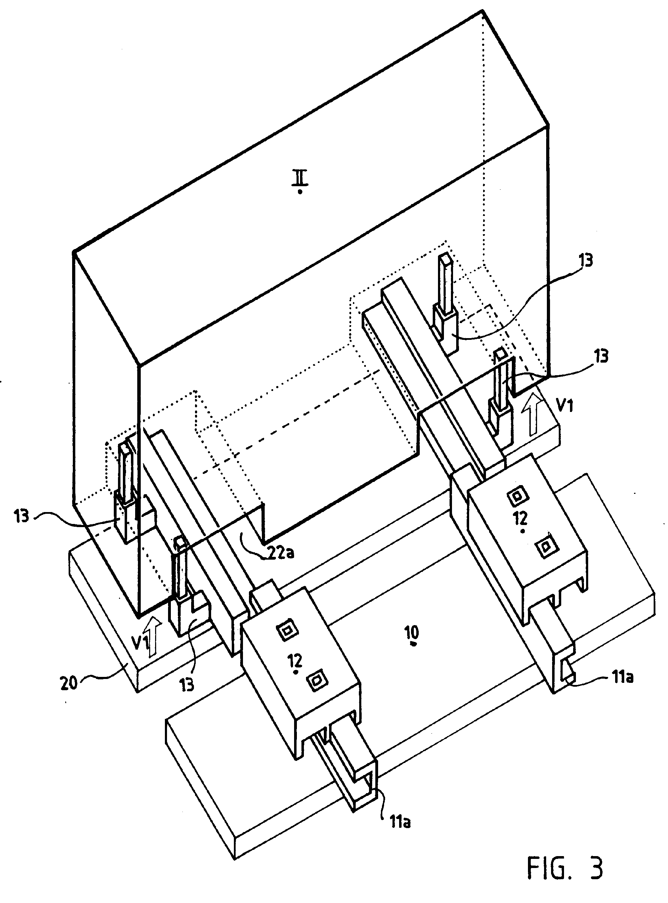

Conformément à une des dispositions principales de l'invention, on notera que les rails porteurs 11b sont équipés, uniformément répartis sur leur longueur, de vérins de levage 13, extensibles et rétractables verticalement. Ces vérins 13 permettent, lorsque les rails porteurs 11b sont en position déployée et logés à l'intérieur des glissières femelles 22, d'élever (cf. fig.3) le conteneur II par rapport au plan de la plate-forme ferroviaire 20. Ainsi, comme on peut le voir sur le dessin de la figure 4, lorsque les vérins de levage 13 sont en extension de manière à permettre une élévation du conteneur II, les chariots 12 peuvent alors évoluer librement, grâce à des organes roulants moteurs appropriés, sur le chemin de roulement latéral formé par les glissières télescopiques mâles déployées 11, à l'intérieur des galeries 22a dont la hauteur a augmenté virtuellement.

Selon une autre disposition avantageuse de l'invention, les chariots 12 du train automoteur sont équipés, uniformément répartis sur leur longueur, de vérins élévateurs 14, extensibles et rétractables verticalement et dont la tête prend appui sur la face interne de la branche horizontale du U renversé des glissières femelles 22. La commande du mouvement d'extension ou de rétraction de la tige des vérins élévateurs 14 assure respectivement l'élévation ou l'abaissement des conteneurs, pour autoriser la dépose ou la pose de ces derniers sur les plate-formes formant assises.

Le fonctionnement de l'appareil de transbordement latéral de l'invention décrit et représenté ci-dessus, est simple et le suivant.

Dans un premier temps, tel qu'illustré sur le dessin de la figure 1, la plate-forme routière 10 est amenée parallèlement à la plate-forme ferroviaire 20, au même niveau que cette dernière à l'aide de béquilles non illustrées équipant généralement ce type de véhicule routier pour conforter la stabilité de la plate-forme 10, lors des manutentations de chargement et de déchargement de celle-ci.

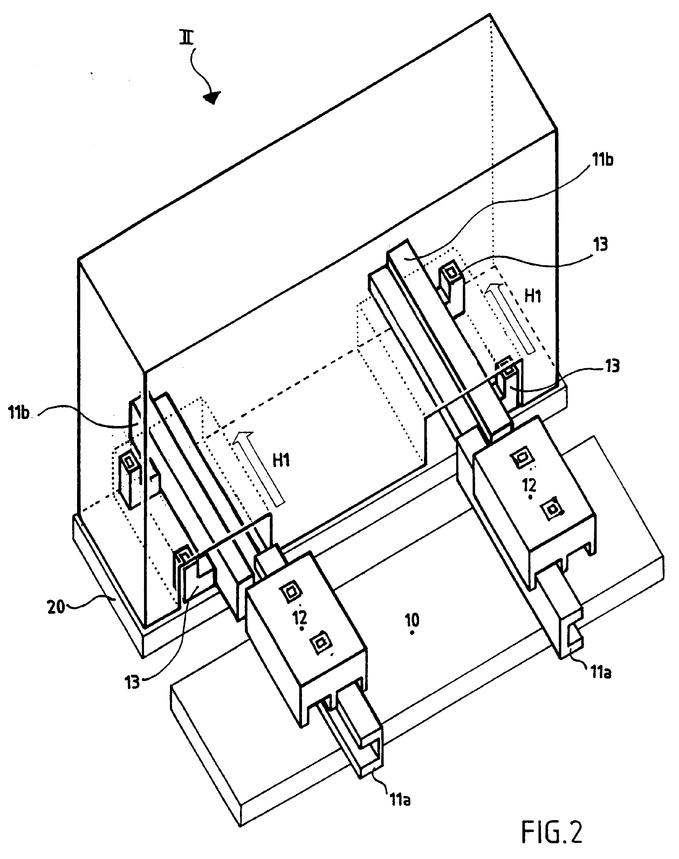

Dans un deuxième temps, tel qu'illustré sur le dessin de la figure 2, les rails porteurs 11b sont déployés latéralement (flèche horizontale H1) de manière à ce qu'ils viennent se positionner à l'intérieur des galeries 22a, au-dessus de la plate-forme ferroviaire 20.

Dans un troisième temps, tel qu'illustré sur le dessin de la figure 3, les tiges des vérins de levage 13 sont déployées (flèche verticale V1), pour décoller le conteneur II de son assise 20 constituée par la plate-forme ferroviaire, augmentant ainsi virtuellement la hauteur des jambages du U renversé des glissières femelles 22 et ainsi, la hauteur des galeries 22a.

Dans un quatrième temps, tel qu'illustré sur le dessin de la figure 4, les chariots 12 du train de roulement automoteur, sont actionnés pour être acheminés (flèche horizontale H2), de la plate-forme routière 10 vers la plate-forme ferroviaire 20, pour aboutir à l'intérieur des galeries 22a du plateau-support 21 du conteneur II.

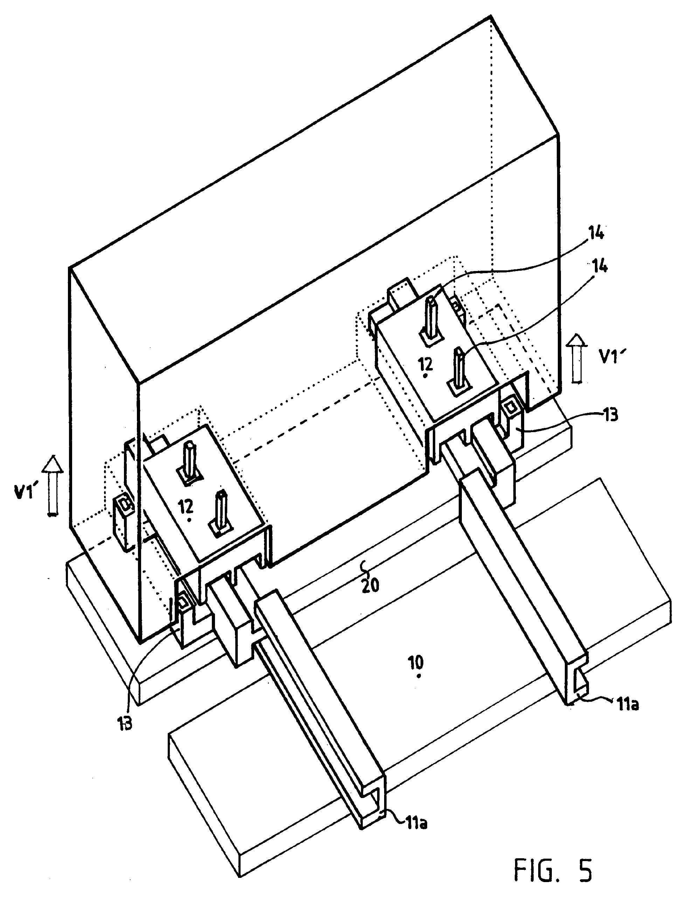

Dans un cinquième temps, tel qu'illustré sur le dessin de la figure 5, les tiges des vérins élévateurs 14 sont déployées (flèche verticale V1′) de telle sorte que le conteneur II soit surélevé et désolidarisé de son portage sur les vérins de levage 13, pour ne reposer que sur les vérins élévateurs 14 des chariots 12 du train de roulement automoteur tout en restant décollé du plan de la plate-forme ferroviaire 20.

Dans un sixième temps, tel qu'illustré sur le dessin de la figure 6, le conteneur II est transporté (flèche H2′), porté par les chariots 12 du susdit train de roulement moteur et via le chemin de roulement formé par les deux glissières mâles déployées 11, au-dessus de la plate-forme 10 du véhicule routier. Il suffit ensuite de commander la rétraction (flèche H1′) des rails porteurs 11b afin de les ramener sur la plate-forme 10 du véhicule routier pour que l'opération proprement dite de transbordement latéral soit considérée comme réalisée.

De la même manière, l'opération de transbordement latéral à partir de la plate-forme 10 d'un véhicule routier vers la plate-forme 20 de la voiture de chemin de fer sera réalisée en opérant les mêmes phases mais dans le sens chronologique inverse.

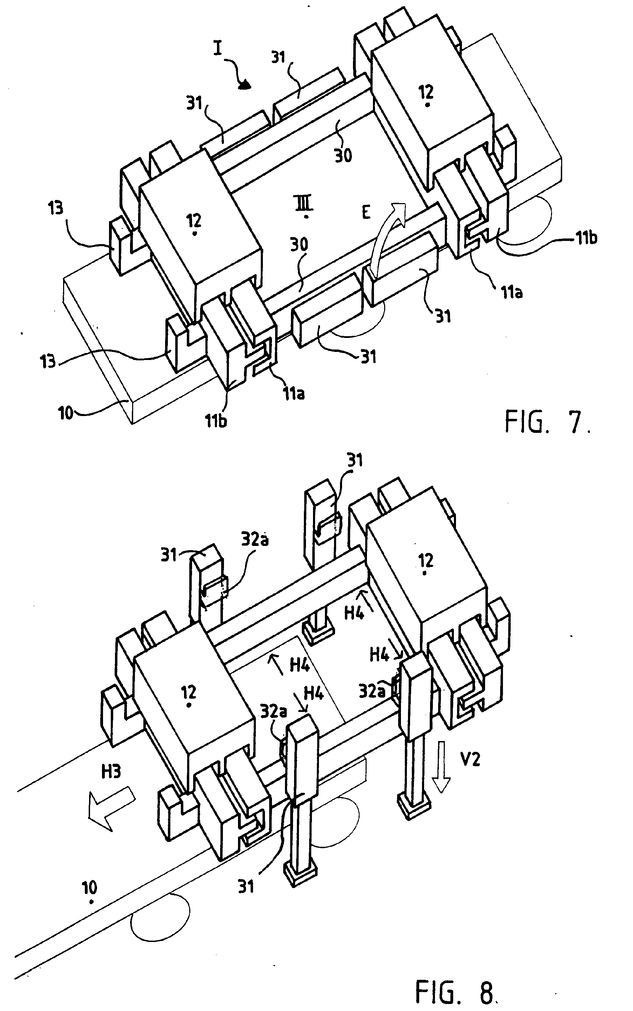

Selon une disposition principale de l'invention, illustrée plus en détail sur les dessins des figures 7 et 8, les deux rails supports 11a du tranbordeur I, sont fixés sur un châssis intermédiaire III constitué notamment par deux longerons 30 disposés parallèlement aux longerons de la plate-forme 10 du véhicule routier et entretoisés par des traverses appropriées non représentées. Selon l'invention, ce châssis intermédiaire III est avantageusement monté de manière amovible sur la plate-forme routière 10. Ainsi, à l'aide d'un moyen de fixation appropriée du châssis III sur la plate-forme routière 10, l'appareil de transbordement I peut être solidarisé à la plate-forme 10 ou désolidarisé en vue d'un déchargement longitudinal tel qu'il sera décrit ci-après.

A cet effet et selon une caractéristique particulièrement avantageuse de l'invention, les longerons 30 du châssis intermédiaire III sont équipés chacun de deux vérins escamotables 31 formant béquilles.

Ainsi, en position escamotée (flèche E) telle qu'illustrée sur le dessin de la figure 7, ces béquilles 31 n'entravent pas le transbordement latéral du conteneur II de la plate-forme routière 10 vers la plate-forme ferroviaire 20, ou vice-versa. En position de travail, telle qu'illustrée sur le dessin de la figure 8, les béquilles 31 sont dressées verticalement pour assurer, par le déploiement et/ou par la rétraction des tiges des vérins 31, l'élévation et/ou l'abaissement du châssis intermédiaire III et de son transbordeur I y associé, par rapport au plan de la plate-forme routière 10. Lorsque le châssis intermédiaire III est désolidarisé de la plate-forme routière 10 et que les tiges des vérins escamotables 31 sont en extension (flèche V2), l'ensemble - châssis intermédiaire III, transbordeur I, conteneur II - est surélevé par rapport au plan de la plate-forme routière 10. Il suffit alors de dégager (flèche H3) la plate-forme 10 de dessous le châssis intermédaire III, par une simple marche avant du véhicule routier pour que le transbordeur I et le conteneur II ne reposent sur le sol que par le châssis III et ses vérins 31.

On comprend que la présence de ce châssis intermédiaire III et de ses béquilles escamotables 31 permettent d'assurer un déchargement longitudinal des conteneurs II de la plate-forme d'un véhicule routier. Il suffit ensuite de modifier le déploiement des tiges des vérins escamotables 31 pour régler la hauteur du châssis III par rapport au sol afin d'assurer un transbordement latéral à un niveau moins élevé, tel celui d'une aire de stockage par exemple.

Selon un mode de réalisation particulièrement avantageuse de l'invention, des réservations sont ménagées dans l'épaisseur de la plate-forme 10 du véhicule routier, pour autoriser l'encastrement des glissières mâles télescopiques 11 ou du châssis intermédiaire III par rapport au plan supérieur de la plate-forme 10. L'intérêt de ces réservations est notamment de permettre la pose du conteneur II sur le plan supérieur de la plate-forme routière 10, pour éviter que ledit conteneur II ne repose encore sur les chariots 12 du train de roulement automoteur lorsque dans le sixième temps décrit ci-dessus, il vient d'être acheminé par les chariots 12 au-dessus de ladite plate-forme routière 10.

Selon une caractéristique particulièrement avantageuse de l'invention, des pinces mâles 32a sont installées sur les corps des vérins escamotables 31 sur leurs faces en regard, pour venir s'interpénétrer dans des pinces femelles 32b appropriées ménagées dans les faces externes du conteneur II. Ainsi, lorsque les vérins escamotables 31 se positionnent verticalement, tels qu'illustrés sur le dessin de la figure 8, les pinces mâles 32a viennent se placer en-dessous des pinces femelles 32b du conteneur II, de telle sorte que le déploiement des tiges de ces mêmes vérins fait engager les prises mâles 32a dans les prises femelles 32b, de manière à surélever le conteneur II, indépendamment du châssis intermédiaire III.

Selon une autre caractéristique particulièrement avantageuse de l'invention, les vérins escamotables 31 sont montés coulissants latéralement (flèches H4) sur leur châssis intermédiaire III, dans un plan parrallèle à ce dernier, de telle sorte que lorsque ces vérins escamotables 31 sont ramenés (figure 7) vers l'intérieur du châssis intermédiaire III, ils n'entravent pas la largeur légale autorisée du gabarit du véhicule routier roulant et lorsqu'ils sont déportés vers l'extérieur (cf. figure 8), ils peuvent déborder du gabarit du véhicule stationnant pour l'opération de transbordement longitudinal. En outre, cette mobilité latérale des vérins escamotables 31 a pour objet de régler le positionnement des prises mâles 32a en vis-à-vis des prises femelles 32b.

Le principe du transbordement longitudinal du conteneur II à partir de la plateforme routière 10, est simple et consiste :
- dans un premier temps, à actionner le coulissement latéral (flèche H4) des vérins escamotables 31 vers l'extérieur du châssis intermédiaire III pour qu'ils puissent déborder du gabarit du véhicule,
- dans un deuxième temps, à dresser verticalement les susdits vérins escamotables 31 et à ajuster la mobilité latérale (flèche H4) des vérins escamotables 31 afin de régler le positionnement des prises mâles 32a en vis-à-vis des prises femelles 32b,
- dans un troisième temps, à actionner le déploiement (flèche V2) des tiges des vérins 31 pour commander dans une première phase l'engagement des prises mâles 32a des corps des vérins escamotables 31 dans les prises femelles 32b du conteneur II et dans une deuxième phase, l'élévation du châssis intermédiaire III et de son transbordeur I avec le conteneur II y associé, par rapport au plan de la plate-forme routière 10,
- et dans un quatrième et dernier temps, à dégager (flèche H3) la plate-forme routière 10 de dessous le châssis intermédaire III par une simple marche avant du véhicule routier pour que le transbordeur I, le châssis intermédiaire III et le conteneur II ne reposent sur le sol que soutenus par les vérins escamotables 31.

On comprend que le transbordeur, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.
- I: Appareil de transbordement,
10 Plate-forme d'un véhicule routier,
11 Glissières mâles télescopiques,
11a Rails supports,
11b Rails porteurs,
12 Chariots,
13 Vérins de levage,
14 Vérins élévateurs,
- II: Conteneur,
20 Plate-forme de la voiture de chemin de fer,
21 Plateau-support du conteneur II,
22 Glissières femelles en U renversé,
22a Galeries,
- III: Châssis porteur de l'appareil,
30 Longerons du châssis III,
31 Vérins escamotables,
32a Prises mâles,
32b Prises femelles,
- FLECHE H1: Mouvement de déploiement latéral des rails-porteurs 11b,
- FLECHE H1': Mouvement de rétraction latérale des rails-porteurs 11b,
- FLECHE V1: Mouvement d'extension des vérins de levage 13,
- FLECHE V1': Mouvement d'extension des vérins élévateurs 14,
- FLECHE H2: Mouvement de déplacement des chariots 12 le long des glissières mâles 11 de la plate-forme routière 10 vers la plate-forme ferroviaire 20,
- FLECHE H2': Mouvement de déplacement des chariots 12 le long des glissières mâles 11 de la plate-forme ferroviaire 20 vers la plate-forme routière 10,
- FLECHE E: Mouvement de redressement en position verticale,
- FLECHE V2: Mouvement d'extension des vérins escamotables 31,
- FLECHE H3: Déplacement en marche avant du véhicule routier,
- FLECHE H4: Mouvement de déplacements latéraux des vérins escamotables 31.

## Revendications

1. Appareil permettant d'assurer le transbordement latéral d'un conteneur (II) de la plate-forme (10) d'un véhicule, dite plate-forme routière, à la plate-forme d'un autre véhicule, dite plate-forme ferroviaire, comprenant au moins :
- un chemin de roulement latéral se composant d'au moins deux glissières mâles télescopiques parallèles (11) destinées à coopérer avec deux glissières femelles correspondantes (22) préformées à cet effet dans le plateau-support (21) dudit conteneur (II) et adoptant le profil d'un U renversé, chacune desdites glissières mâles (11) étant constituée d'au moins deux rails juxtaposés dont l'un, dit rail support (11a), est fixé à la plate-forme routière (10), transversalement aux longerons de cette dernière, et dont l'autre, dit rail porteur (11b), est le rail qui peut être déployé latéralement en déport de la plate-forme routière (10) pour venir aboutir dans les galeries (22a) définies par les glisières femelles (22) de manière à se positionner au-dessus de la plate-forme ferroviaire (20) sur laquelle il prend appui,
- et un train de roulement automoteur constitué de deux chariots (12) montés mobiles le long desdites glissières mâles déployées (11) pour venir trouver place à l'intérieur des galeries (22a) desdites glissières femelles (22), **CARACTERISE PAR LE FAIT QUE** les susdits rails porteurs (11b) des glissières mâles télescopiques (11) sont équipés, uniformément répartis sur leur longueur, de vérins de levage (13), extensibles et rétractables verticalement, et agencés de manière à venir se caler, lorsque lesdits rails porteurs (11b) sont en extension et logés à l'intérieur des galeries (22a) desdites glissières femelles (22) dudit conteneur (II), entre la plate-forme ferroviaire (20) et la face interne de la branche horizontale du U renversé des glissières femelles (22), de telle sorte que le déploiement de leurs tiges actionne l'élévation du conteneur (II) par rapport au plan de la plate-forme ferroviaire (20) pour augmenter la hauteur des jambages des galeries (22a) afin que les chariots (12) du train de roulement automoteur puissent venir trouver place à l'intérieur des glissières femelles (22) et autoriser un transdordement latéral ou un transbordement longitudinal dudit conteneur.

2. Appareil selon la revendication 1, **CARACTERISE PAR LE FAIT QUE** les rails supports (11a) desdites glissières mâles télescopiques (11) sont fixés transversalement sur les longerons (30) d'un châssis intermédiaire (III), lequel est monté, de manière amovible, sur la plate-forme routière (10) du véhicule routier.

3. Appareil selon les revendications 1 et 2, **CARACTERISE PAR LE FAIT QUE** les rails supports (11b) des susdites glissières mâles télescopiques (11) sont montés mobiles verticalement à l'aide de moyens de levage calés entre la plate-forme routière (10) et lesdits rails porteurs (11b) des glissières mâles télescopiques (11).

4. Appareil selon les revendications 1 et 2, **CARACTERISE PAR LE FAIT QUE** les susdits longerons (30) du châssis intermédiaire (III) sont équipés d'au moins deux paires de vérins escamotables (31) destinés à évoluer entre une position escamotée pour s'effacer au-dessous du châssis intermédiaire (III), et une position verticale, formant béquilles en prenant appui sur le sol, où les mouvements de déploiement et/ou de rétraction des tiges des vérins (31) assurent l'élévation et/ou l'abaissement du châssis intermédiaire (III) par rapport au plan de la plate-forme routière, pour autoriser un transbordement longitudinal du châssis intermédiaire III et de l'ensemble de l'appareil de transbordement latéral (I), avec le conteneur (II) installé dessus.

5. Appareil selon les revendications 1, 2 et 3, **CARACTERISE PAR LE FAIT QUE** des réservations sont préformées dans l'épaisseur de la plate-forme routière (10) pour autoriser l'encastrement des glissières mâles télescopiques (11) lorsque les rails porteurs (11b) sont rentrés au-dessus de la plate-forme routière (10), de telle sorte que le conteneur (II) transbordé sur la plate-forme routière (10) puisse reposer sur le plan supérieur de cette dernière.

6. Appareil selon les revendications 1 à 5 prises ensemble, **CARACTERISE PAR LE FAIT QUE** les susdits chariots (12) du train automoteur sont équipés, uniformément répartis sur leur longueur, de vérins élévateurs (14), extensibles et rétractables verticalement et dont la tête prend appui sur la face interne de la branche horizontale du U renversé des glissières femelles (22), de telle sorte qu'ils puissent engendrer, lorsque les chariots (12) sont glissés dans les galeries (22a), une surélévation du conteneur (II) pour le dégager de sa portance sur lesdits vérins de levage (13) et pour autoriser son transport par les chariots (12), le soutenant par les vérins élévateurs (14), pendant la phase proprement dite de transbordement.

7. Appareil selon les revendications 2 et 4, **CARACTERISE PAR LE FAIT QUE** des pinces mâles (32a) sont installées sur les corps des vérins escamotables (31) sur leurs faces en regard, pour venir s'interpénétrer dans des pinces femelles (32b) appropriées ménagées dans les faces externes du conteneur (II) pour les recevoir.

8. Appareil selon les revendications 4 et 7, **CARACTERISE PAR LE FAIT QUE** les susdits vérins escamotables (31) sont montés coulissants latéralement (flèches H4) sur leur châssis intermédiaire (III), dans un plan parrallèle à ce dernier, de telle sorte que lorsque ces vérins escamotables (31) sont ramenés vers l'intérieur du châssis intermédiaire (III), ils n'entravent pas la largeur légale autorisée du gabarit du véhicule routier roulant et lorsqu'ils sont déportés vers l'extérieur, ils puissent déborder du gabarit du véhicule stationnant pour l'opération de transbordement longitudinal.

9. Procédé de transbordement latéral d'un conteneur (II) de la plate-forme ferroviaire (20) à une plate-forme routière (10) à l'aide de l'appareil (I) selon les revendications 1, 3, 5 et 6 prises ensemble, le procédé consistant :
- dans un premier temps, à amener la plate-forme routière (10) parallèlement à la plate-forme ferroviaire (20), au même niveau que cette dernière,
- dans un deuxième temps, à déployer les rails porteurs (11b) latéralement (flèche horizontale H1) de manière à ce qu'ils viennent se déployer se positionner à l'intérieur des galeries (22a), au-dessus de la plate-forme ferroviaire (20),
- dans un troisième temps, à déployer les tiges des vérins de levage (13) (flèche verticale V1) pour décoller le conteneur (II) de son assise (20) constituée par la plate-forme ferroviaire, augmentant ainsi la hauteur des galeries (22a),
- dans un quatrième temps, à acheminer les chariots (12) du train de roulement automoteur (flèche horizontale H2) de la plate-forme routière (1)0 vers la plate-forme ferroviaire (20), pour les loger à l'intérieur des galeries (22a) du plateau-support (21) du conteneur (II),
- dans un cinquième temps, à déployer les tiges des vérins élévateurs (14) (flèche verticale V1′) de telle sorte que le conteneur (II) soit surélevé et désolidarisé de son portage sur les vérins de levage (13) pour ne reposer que sur les vérins élévateurs (14) des chariots (12) du train de roulement automoteur tout en restant décollé du plan de la plate-formeferroviaire (20),
- dans un sixième temps, à transporter le conteneur (II) (flèche H2′) porté par les chariots (12) du susdit train de roulement moteur et via le chemin de roulement formé par les deux glissières mâles déployées (11), jusqu'au-dessus de la plate-forme routière (10),
- et dans un septième et dernier temps, à commander d'une part, la rétraction (flèche H1′) des rails porteurs (11b) afin de les ramener sur la plate-forme routière (10) et d'autre part, la rétraction des tiges des vérins élévateurs (14) pour que le conteneur (II) repose directement sur la plate-forme routière (10), indépendamment de l'appareil (I).

10. Procédé de transbordement longitudinal d'un conteneur (II) à partir d'une plate-forme routière (10) équipée de l'appareil (I) selon les revendications 1 à 8 prises ensemble, le procédé consistant :
- dans un premier temps, à actionner le coulissement latéral (flèche H4) des vérins escamotables (31) vers l'extérieur du châssis intermédiaire (III) pour qu'ils puissent déborder du gabarit du véhicule,
- dans un deuxième temps, à dresser verticalement les susdits vérins escamotables (31) et à ajuster la mobilité latérale (FLECHE H4) des vérins escamotables (31) afin de régler le positionnement des prises mâles (32a) en vis-à-vis des prises femelles (32b),
- dans un troisième temps, à actionner le déploiement (flèche V2) des tiges des vérins (31) pour commander dans une première phase l'engagement des prises mâles (32a) des corps des vérins escamotables (31) dans les prises femelles (32b) du conteneur (II) et dans une deuxième phase, l'élévation du châssis intermédiaire (III) et de son transbordeur (I) avec le conteneur (II) y associé, par rapport au plan de la plate-forme routière (10),
- et dans un quatrième et dernier temps, à dégager (flèche H3) la plate-forme routière (10) de dessous le châssis intermédaire (III) par une simple marche avant du véhicule routier pour que le transbordeur (I), le châssis intermédiaire (III) et le conteneur (II) ne reposent sur le sol que soutenus par les vérins escamotables (31).

## Patentansprüche

1. Vorrichtung zum seitlichen Umladen eines Containers (II) von der Plattform (10) eines Fahrzeuges, der sogenannten Straßenplattform, auf die Plattform eines anderen Fahrzeuges, die sogenannte Eisenbahnplattform, bestehend aus mindestens:
- einer seitlichen Rollbahn, bestehend aus mindestens zwei teleskopischen parallelen männlichen Gleitschienen (11) zur Zusammenarbeit mit zwei zu diesem Zweck in der Tragplatte (21) des besagten Containers (II) vorgeformten, die Form eines umgekehrten U aufweisenden, dazupassenden weiblichen Gleitschienen (22), wobei jede dieser besagten männlichen Gleitschienen (11) aus mindestens zwei nebeneinander gesetzten Schienen besteht, wobei eine dieser Schienen, die besagte Stütztschiene (11a), an der Straßenplattform (10) quer zu ihren Längsträgern befestigt ist, und die andere, die besagte Tragschiene (11b), die Schiene ist, die seitlich versetzt zu der Straßenplattform (10) ausgefahren werden kann, damit sie in die durch die weiblichen Schienen (22) definierten Tunnel (22a) hineinreicht, um sich oberhalb der Schienenplattform (20) zu positionieren, auf welche sie sich stützt.
- und einem selbstangetriebenen Laufwerk, das aus zwei entlang der ausgefahrenen besagten weiblichen Schienen (11) beweglich angebrachten Schlitten (12) besteht, damit diese in den Tunneln (22a) der besagten weiblichen Gleitschienen (22) Platz finden, gekennzeichnet dadurch, daß die besagten Tragschienen (11b) der teleskopischen männlichen Gleitschienen (11) mit auf ihrer Länge gleichmäßig verteilten, senkrecht ausziehbaren und einziehbaren Hubzylindern (13) versehen sind, welche Hubzylinder (13) derart gestaltet sind, daß sie sich zwischen der Eisenbahnplattform (20) und der inneren Seite des waagrechten Schenkels des umgekehrten U der weiblichen Gleitschienen (22) festklemmen, wenn die besagten Tragschienen (11b) ausgefahren sind und sich innerhalb der Tunnel (22a) der besagten weiblichen Gleitschienen (22) des besagten Containers (II) befinden, sodaß das Ausfahren der Stangen der Gleitschienen (11b) das Heben des Containers (II) im Verhältnis zu der Fläche der Eisenbahnplattform (20) bewirkt, um die Höhe der Wände der Tunnel (22a) zu erhöhen, damit die Schlitten (12) des selbstangetriebenen Laufwerkes in den weiblichen Gleitschienen (22) Platz finden und ein seitliches Verladen oder ein längsseitiges Umladen des besagten Containers ermöglichen.

2. Vorrichtung nach Anspruch 1, gekennzeichnet dadurch, daß die Stutztschienen (11a) der besagten teleskopischen männlichen Gleitschienen (11) quer auf den Längsträgern (30) eines Zwischengestelles (III) befestigt sind, welches auf der Straßenplattform (10) des Straßenfahrzeuges beweglich angebracht ist.

3. Vorrichtung nach den Ansprüchen 1 und 2 gekennzeichnet dadurch, daß die Stütztschienen (11b¹) der besagten teleskopischen männlichen Gleitschienen (11) durch zwischen der Straßenplattform (10) und den besagten Tragschienen (11b) der teleskopischen männlichen Gleitschienen (11) fesgeklemmte Lasthebemitteln senkrecht beweglich angebracht sind.

4. Vorrichtung nach den Ansprüchen 1 und 2 gekennzeichnet dadurch, daß die besagten Längsträger (30) des Zwischengestelles (III) mit mindestens zwei Paare einziehbarer Zylinder (31) versehen sind, deren Zweck es ist, Bewegungen zwischen einer eingezogenen Position auszuführen, wobei sie unter dem Zwischengestell (III) verschwinden, und einer senkrechten Position, in der sie Abstüztfüße bilden, indem sie auf den Boden reichen, wobei das Ausfahren und/oder Einfahren der Stangen der einziehbaren Zylinder (31) das Heben und/oder das Senken des Zwischengestelles (III) im Verhältnis zu der Fläche der Straßenplattform bewirkt, um ein längsseitiges Verladen des Zwischengestelles (III) und der gesamten Umladevorrichtung zum seitlichen Verladen (I) mitsamt dem darauf befindenden Container (II) zu ermöglichen.

5. Vorrichtung nach den Ansprüchen 1, 2 und 3, gekennzeichnet dadurch, daß Vertiefungen in der Dicke der Straßenplattform (10) vorgeformt sind, um das Versenken der teleskopischen männlichen Gleitschienen (11) zu ermöglichen, wenn die Tragschienen (llb) oberhalb der Straßenplattform (10) eingezogen sind, sodaß der auf die Straßenplattform (10) umgeladene Container (II) auf der oberen Fläche dieser letzteren liegen kann.

6. Vorrichtung nach den Ansprüchen 1 bis 5 insgesamt, dadurch gekennzeichnet, daß die besagten Schlitten (12) des selbstangetriebenen Laufwerkes mit auf ihrer Länge regelmäßig verteilten, senkrecht ausziehbaren und einziebahren Hubkolben (14) versehen sind, dessen Kopf sich auf die innere Fläche des waagrechten Schenkels des umgekehrten U der weiblichen Gleitschienen (22) stützt, sodaß die genannten einziehbaren Hubkolben (14), wenn die Schlitten (12) in den Tunneln (22a) Platz gefunden haben, ein Heben des Containers (II) bewirken können, um ihn von seinem Aufliegen auf den Hubzylindern (13) zu befreien und seine Beförderung durch die Schlitten (12) zu ermöglichen, indem der Container (II) während der eigentlichen Beförderungsphase durch die Hubkolben (14) gestützt ist.

7. Vorrichtung nach den Ansprüchen 2 und 4, dadurch gekennzeichnet, daß männliche Klemmen (32a) auf den gegenüberliegenden Seiten des Gehäuses der einziehbaren Zylinder (31) angebracht sind, um sich mit den auf den Außenseiten des Containers (II) zur Aufnahme der besagten männlichen Klemmen (32) entsprechend eingerichteten weiblichen Aufnahmeklemmen (32b) gegenseitig zu durchdringen.

8. Vorrichtung nach den Ansprüchen 4 und 7, dadurch gekennzeichnet, daß die besagten einziehbaren Zylinder (31) (Pfeile H 4) auf ihrem Zwischengestell (III) in einer zu diesem letzteren parallelen Ebene seitlich verschiebbar angebracht sind, sodaß diese einziehbaren Zylinder (31), wenn sie nach innen zum Zwischengestell (III) zurückgeführt sind, die zugelassene legale Breite des Lademaßes des Straßenfahrzeuges nicht beeinträchtigen, und daß sie über das Lademaß des geparkten Fahrzeuges für den längsseitigen Umladevorgang herausragen können, wenn sie nach außen versetzt sind.

9. Verfahren zum seitlichen Umladen eines Containers (II) von der Eisenbahnplattform (20) auf eine Straßenplattform (10) mit Hilfe der Vorrichtung (I) nach den Ansprüchen 1, 3, 5 und 6 insgesamt, wobei das Verfahren darin besteht:
- in einem ersten Arbeitsvorgang die Straßenplattform (10) parallel zur Eisenbahnplattform (20) und an deren Höhe zu bringen,
- in einer zweiten Arbeitsvorgang die Tragschienen (llb) seitlich (waagrechter Pfeil H1) auszufahren, sodaß sie in den Tunneln (22a) oberhalb der Eisenbahnplattform (20) Platz finden,
- in einem dritten Arbeitsvorgang die Stangen der Hubzylinder (13) auszufahren (senkrechter Pfeil VI), sodaß der Container (II) von seiner aus der Eisenbahnplattform bestehenden Auflagefläche (20) abgehoben wird, wobei die Höhe der Tunnel (22a) erhöht wird,
- in einem vierten Arbeitsvorgang, die Schlitten (12) des selbstangetriebenen Laufwerkes von der Straßenplattform (10) zu der Eisenbahnplattform (20) (waagrechter Pfeil H2) zu befördern, um sie in die Tunnel (22a) der Trageplatte (21) des Containers (II) zu führen,
- in einem fünften Arbeitsvorgang die Stangen der Hubkolben (14) auszufahren (senkrechter Pfeil V1′), sodaß der Container (II) hochgehoben wird und von seinem Träger auf den Hubzylindern (13) getrennt wird, um ausschließlich auf den Hubkolben (14) der Schlitten (12) des selbstangetriebenen Laufwerkes zu liegen, wobei er von der Fläche der Straßenplattform (20) weiterhin getrennt bleibt.
- in einem sechsten Arbeitsvorgang den von den Schlitten (12) des besagten selbstangetriebenen Laufwerkes getragenen Container (II) (Pfeil H2′) zu befördern und über die durch die zwei männlichen Gleitschienen (11) gebildete Rollbahn bis zu der Straßenplattform (10) zu befördern (Pfeil H2′).
- in einem siebten und letzten Arbeitsvorgang einerseits das Einziehen (Pfeil H1') der Tragschienen (11b) zu bewirken, um diese auf die Straßenplattform (10) zurückzubringen, und andererseits das Einziehen der Stangen der Hubkolben (14) ebenfalls zu bewirken, sodaß der Container (II) direkt und unahhängig von der Vorrichtung (I) auf der Straßenplattform (10) aufliegt.

10. Verfahren zum längsseitigen Umladen eines Containers (II) von einer Straßenplattform (10) aus, die mit der Vorrichtung (I) nach den Ansprüchen 1 bis 8 insgesamt versehenen ist, wobei das Verfahren besteht aus:
- in einem ersten Arbeitsvorgang dem seitlichen Gleiten (Pfeil H4) der einziehbaren Zylinder (31) nach außen vom Zwischengestell (III) weg zu bewirken, sodaß sie über das Lademaß des Fahrzeuges hinausragen können.
- in einem zweiten Arbeitsvorgang die besagten einziehbaren Zylinder (31) senkrecht zu richten, und die seitliche Verschiebbarkeit (Pfeil H4) der einziehbaren Zylinder (31) zu bestimmen, um die Positionierung der männlichen Klemmen (32a) im Verhältnis zu den weiblichen Klemmen (32b) einzustellen,
- in einem dritten Arbeitsvorgang dem Ausfahren (Pfeil V2) der Stangen der einziehbaren Zylinder (31) zu bewirken, um in einer ersten Phase das Eindringen der männlichen Klemmen (32a) der Gehäuse der einziehbaren Zylinder (31) in die weiblichen Klemmen (32b) des Containers (II), und in einer zweiten Phase das Heben des Zwischengestelles (III) und seiner Umladevorrichtung (I) mitsamt dem Container (II) im Verhältnis zu der Fläche der Straßenplattform (10) zu steuern,
- in einem vierten und letzten Arbeitsvorgang die Straßenplattform (10) durch einfaches Vorfahren des Straßenfahrzeuges (Pfeil H3) von unter dem Zwischengestell (III) zu entfernen, sodaß die Umladevorrichtung (I), das Zwischengestell (III) und der Container (II) ausschließlich durch die einziehbaren Zylinder (31) gestützt auf den Boden stehen.

## Claims

1. Device for the lateral transfer of a container (II) from the platform (10) of a vehicle, called road platform, to the platform of another vehicle, called rail platform, comprising at least:
- one lateral rolling track composed of at least two parallel telescopic male slides (11) for cooperating with respective female slides (22) preformed for this purpose in the supporting plate (21) of said container (II) and having an inverted U profile, each of said male slides (11) being made of at least two juxtaposed rails of which one, called support rail (11a) is attached to the road platform (10) transversally to the side members thereof, and the other, called carrying rail (11b) is the rail that can be extended laterally in cantilever off the road platform (10) and into the galleries (22a) defined by the female slides (22) so as to be positioned above the rail platform (20) on which it leans,
- and a self-propelled running carriage made of two wagons (12) movably mounted along said extended male slides (11) to be inserted into the galleries (22a) of said female slides (22), **characterized in that** said carrying rails (11b) of the telescopic male slides (11) are fitted with vertically extendable and retractable lifting actuators (13) arranged uniformly along their length and designed so as to be locked, when said carrying rails (11b) are extended and accommodated inside said galleries (22b) of said female slides (22) of said container (II), between the rail platform (20) and the internal aspect of the horizontal arm of the inverted U of the female slides (22), so that the extension of their rods causes the rise of the container (II) relative to the plane of the rail platform (20) to increase the height of the jambs of the galleries (22a) so that the wagons (12) of the self-propelled running carriage can be accommodated inside the female slides (22) and allow lateral transfer or longitudinal transfer of said container.

2. Device as per claim 1, **characterized** **in** **that** the supporting rails (11a) of said telescopic male slides (11) are transversally attached to the side members (30) of an intermediate frame (III), which is removably mounted on the road platform (10) of the road vehicle.

3. Device as per claims 1 and 2, **characterized** **in that** the supporting rails (11b) of said telescopic male slides (11) are mounted for vertical displacement using lifting means locked between the road platform (10) and said carrying rails (11b) of the telescopic male slides (11).

4. Device as per claims 1 and 2, **characterized** **in** **that** said side members (30) of the intermediate frame (III) are provided with at least two pairs of retractable actuators (31) for displacement between a retracted position to be retracted under the intermediate frame (III) and a vertical position forming feet by being supported on the ground, wherein the extension and/or retraction movements of the actuator (31) rods cause the rise and/or descent of the intermediate frame (III) relative to the plane of the road platform, to allow longitudinal transfer of the intermediate frame (III) and of the entire lateral transfer device (I), with the container (II) lying thereon.

5. Device as per claims 1, 2 and 3, **characterized** **in** **that** recesses are preformed in the thickness of the road platform (10) to allow engagement of the telescopic male slides (11) when the carrying rails (11b) are retracted above the road platform (10), so that the container (II) transferred on the road platform (10) can rest on the upper plane thereof.

6. Device as per claims 1 to 5 together, **characterized** **in that** said wagons (12) of the self-propelled carriage are fitted with vertically extendable and retractable jacks (14) arranged uniformly along their length and with their head resting on the internal side of the horizontal arm of the inverted U of the female slides (22), so that, when the wagons (12) have slid into the galleries (22a), they can cause a rise of the container (II) to clear it from its bearing on said jacks (13) and to allow its transport by the wagons (12), supporting it with jacks (16), during the transfer phase itself.

7. Device as per claims 2 and 4, **characterized in** **that** male clamps (32a) are fitted on the body of the retractable actuators (31) on their sides facing each other, to engage with appropriate female clamps (32b) provided in the external sides of the container (II) to accommodate them.

8. Device as per claims 4 and 7, **characterized in** **that** said retractable actuators (31) are mounted to slide laterally (arrow H4) on the intermediate frame (III), in a plane parallel thereto, so that when these retractable actuators (31) are brought back inside the intermediate frame (III), they do not hinder the gauge width authorized by law of the vehicle parked for the longitudinal transfer operation.

9. Method for the lateral transfer of a container (II) from the rail platform (20) to a road platform (10) using the device (I) as per claims 1, 3, 5 and 6 together, which method consists in:
- firstly, bringing the road platform (10) parallel to the rail platform (20), at the same level as the latter,
- secondly, extending the carrying rails (11b) laterally (horizontal arrow H1) so that they are extended and positioned inside the galleries (22a), above the rail platform (20),
- thirdly, extending the rods of the jacks (13) (vertical arrow V1) to lift the container (II) off its base (20) made of the rail platform, thus increasing the height of the galleries (22a),
- fourthly, displacing the wagons (12) of the self-propelled running carriage (horizontal arrow H2) from the road platform (10) to the rail platform (20), to accommodate them inside the galleries (22a) of the supporting plate (21) of the container (II),
- fifthly, extending the rods of the jacks (14) (vertical arrow V1′) so that the container (II) is lifted and separated from its bearing on the jacks (13) to rest only on the jacks (14) of the wagons (12) of the self-propelled running carriage while remaining lifted off the plane of the rail platform (20),
- sixthly, transporting the container (II) (arrow H2′) carried by the wagons (12) from said self-propelled running carriage via the rolling track formed by both extended male slides (11), up to above the road platform (10),
- and sevenly and lastly, controlling the retraction (arrow H1′) of the carrying rails (11b), on one hand, to bring them back on the road platform (10) and, on the other hand, the retraction of the rods of the jacks (14) so that the container (II) lies directly on the road platform (10), independently from the device (I).

10. Method for the longitudinal transfer of a container (II) from a road platform (10) fitted with the device (I) as per claims 1 to 8 together, which method consists in:
- firstly, causing the retractable jacks (31) to slide laterally (arrow H4) towards the outside of the intermediate frame (III) so that they can stand out from the vehicle gauge,
- secondly, straightening up said retractable jacks (31) vertically and adjusting the lateral mobility (arrow H4) of the retractable jacks (31) so as to adjust the position of the male connections (32a) opposite the female connections (32b),
- thirdly, causing the extension (arrow V2) of the rods of the actuators (31) to control, in a first phase, the engagement of the male connections (32a) of the bodies of the retractable actuators (31) into the female connections (32b) of the container (II) and in a second phase, the rise of the intermediate frame (III) and of its transferring device (I) along with the associated container (II), relative to the plane of the road platform (10),
- and fourthly and lastly, disengaging (arrow H3) the road platform (10) from beneath the intermediate frame (III) by simply driving the road vehicle forward so that the transferring device (I), the intermediate frame (III) and the container (II) rest on the ground only with the support of the retractable actuators (31).
